# FASCICULE DE BREVET EUROPEEN

(11) **EP 1 132 269 B1**
(45) Date de publication et mention de la délivrance du brevet: **22.03.2006**
(21) Numéro de dépôt: 01400595.3
(22) Date de dépôt: 07.03.2001
(51) Int. Cl.: B60S 1/54, B60S 1/60

(54) **Dispositif de nettoyage de feu arrière de véhicule**
Fahrzeugrücklichtreinigungsvorrichtung
Cleaning device for rear lights of vehicle

(30) Priorité: 07.03.2000 FR 0002906
(43) Date de publication de la demande: 12.09.2001
(73) Titulaire: CENTRE SCIENTIFIQUE ET TECHNIQUE DU BATIMENT, F-75782 Paris Cédex 16 (FR); France Design, 79140 Cerizay (FR)
(72) Inventeur: Gandemer, Jacques, 44700 Orvault (FR); Boucher, Jean-Paul, 44400 Reze (FR); Queveau, Gérard, 79140 Le Pin (FR); Vrillac, Philippe, 85290 Saint-Laurent-Sur-Sevre (FR)
(74) Mandataire: Bérogin, Francis

(56) Documents cités:
- DE-A- 2 422 665
- DE-A- 4 111 635
- PATENT ABSTRACTS OF JAPAN vol. 009, no. 264 (M-423), 22 octobre 1985 (1985-10-22) & JP 60 110552 A (HONDA GIKEN KOGYO KK), 17 juin 1985 (1985-06-17)

## Description

La présente invention est relative aux dispositifs de nettoyage des feux de véhicules automobiles, et notamment de leurs feux arrière.

L'invention concerne plus particulièrement un dispositif de nettoyage de feu arrière de véhicule automobile, comprenant un organe de circulation de courant d'air constitué d'un ventilateur électrique qui est agencé à l'intérieur du véhicule et auquel est connecté un conduit d'écoulement d'air, une extrémité de ce conduit débouchant dans la zone du feu arrière de telle façon que l'air contenu à l'intérieur du véhicule est propulsé, par ledit ventilateur, dans le conduit d'écoulement d'air, puis expulsé par l'extrémité dudit conduit en direction du feu arrière.

Un tel dispositifs de nettoyage est décrit par exemple dans le document DE-A-24 22 665.

L'inconvénient majeur de ce dispositif de nettoyage réside dans le fait que son organe de circulation d'air est constitué par le ventilateur du moteur du véhicule, lequel est situé à l'avant de ce dernier. Une telle disposition du ventilateur nécessite l'utilisation d'un conduit d'écoulement qui s'étend sur toute la longueur du véhicule. Il en résulte un dispositif de nettoyage qui est non seulement relativement complexe à installer, mais également peu fiable compte tenu de la distance importante qui sépare le ventilateur des feux arrière, le courant d'air balayant nécessairement ces derniers avec une vitesse très réduite.

Un autre inconvénient de ce dispositif de nettoyage est qu'il ne peut être actionné que lorsque le véhicule circule. De ce fait, dans le cas où le véhicule est immobilisé, dans un embouteillage par exemple, ce dispositif de nettoyage ne permet pas d'éviter l'encrassement des feux arrière par les particules d'échappement des véhicules voisins.

Le document de brevet JP-A-110 552/85 décrit un dispositif de nettoyage de feu arrière de véhicule mettant en oeuvre un jet d'air extérieur propre à s'écouler sensiblement parallèlement à la surface du feu arrière, mais induit par un écoulement naturel d'air, dû au déplacement du véhicule, dans un conduit d'introduction d'air délimité par une partie externe d'un cadre fixé à l'arrière du véhicule, et par conséquent inactif lorsque le véhicule est à l'arrêt.

La présente invention a notamment pour but de rendre les dispositifs de nettoyage du genre en question à la fois plus compacts et plus fiables.

A cet effet, le dispositif selon l'invention est caractérisé en ce qu'il comprend un boîtier disposé à proximité du feu arrière, ledit boîtier comportant une première partie qui est conformée de manière à contenir ledit ventilateur, et une deuxième partie qui est conformée de manière à constituer ledit conduit d'écoulement d'air.

Dans un mode de réalisation préféré du dispositif de nettoyage selon l'invention, on peut éventuellement avoir recours en outre à l'une et/ou à l'autre des dispositions suivantes :
- le feu arrière comporte une surface externe qui comporte un bord supérieur au-dessus duquel débouche ladite extrémité du conduit d'écoulement d'air, cette dernière étant orientée de telle sorte que l'air expulsé est dirigé selon une direction sensiblement tangente à la surface externe du feu arrière ;
- ladite extrémité du conduit d'écoulement d'air s'étend le long du bord supérieur de la surface externe du feu arrière ;
- ladite extrémité du conduit d'écoulement d'air définit une fente qui présente une épaisseur comprise entre 0,5 cm et 1 cm environ ;
- l'air expulsé a une vitesse minimum de 12 m/s ;
- la surface externe du feu arrière comporte des moyens de guidage pour imposer une trajectoire déterminée à l'air expulsé ;
- les moyens de guidage d'air sont des nervures qui s'étendent sur la surface externe du feu arrière selon une direction sensiblement verticale.

D'autres caractéristiques et avantages de l'invention apparaîtront au cours de la description détaillée suivante d'un de ses modes de réalisation, donné à titre d'exemple non limitatif, en regard des dessins joints.

Sur les dessins :
- la figure 1 est une vue en coupe verticale du mode de réalisation de l'invention ;
- la figure 2 est une vue en coupe du dispositif de nettoyage représenté sur la figure 1, la coupe étant prise le long de la ligne II-II de la figure 1 ;
- la figure 3 est une vue en coupe du feu arrière représenté sur la figure 1, la coupe étant prise le long de la ligne III-III de la figure 1.

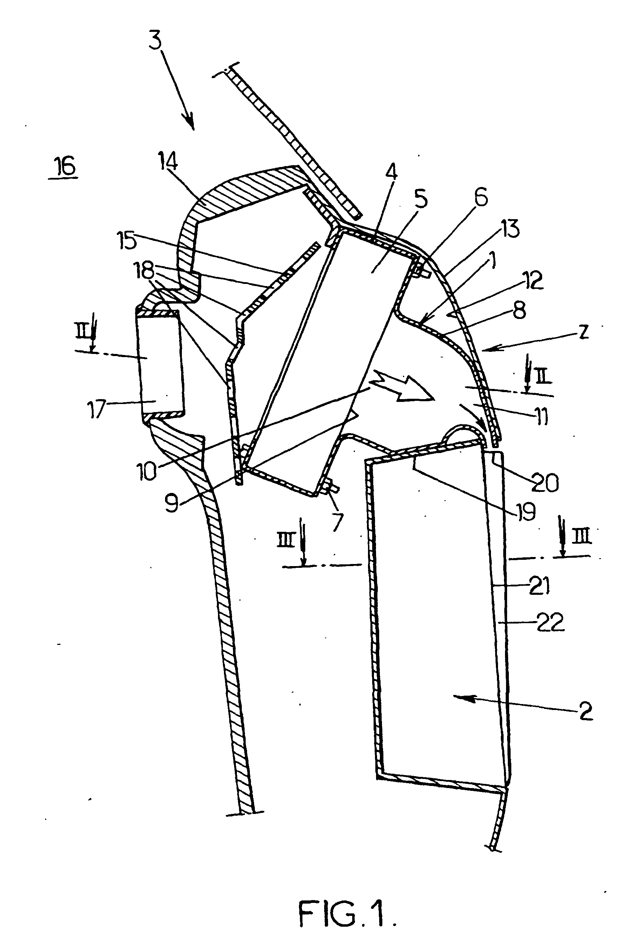

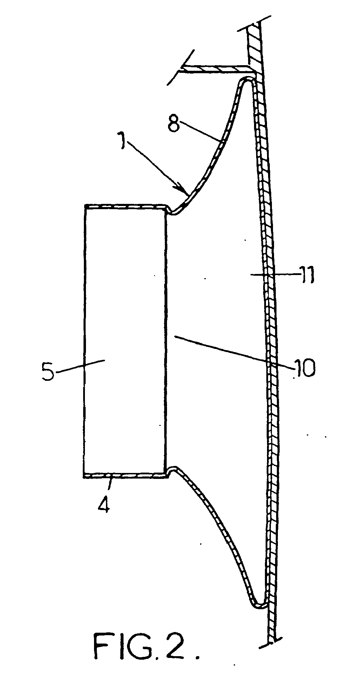

En référence aux figures 1 et 2, le dispositif de nettoyage de feu arrière selon l'invention comprend un boîtier 1 qui est disposé à proximité d'un feu arrière 2 de véhicule automobile 3, le feu arrière étant logé dans une cavité qui a, dans cet exemple, une forme générale sensiblement parallélépipédique.

Le boîtier 1 comporte une première partie 4 de forme par exemple sensiblement parallélépipédique, dans laquelle est logé un organe de circulation d'air 5, constitué d'un ventilateur électrique.

Dans l'exemple représenté, ce ventilateur est maintenu en place dans la première partie 4 du boîtier 1 par des boulons 6 et 7.

Le ventilateur 5 est destiné à être relié à une source de courant électrique continu telle que, de préférence, la batterie du véhicule.

Le boîtier 1 comporte une deuxième partie 8 formant conduit d'écoulement d'air, qui s'étend à partir d'un grand côté 9 de la première partie 4, en s'évasant vers l'extérieur, et qui comporte une première extrémité ouverte 10 débouchant dans un orifice ménagé dans le grand côté 9 de la première partie 4. Du côté opposé à la première extrémité ouverte 10, la deuxième partie 8 comporte une portion étranglée 11 délimitant une deuxième extrémité ouverte, cette portion étranglée 11 étant destinée, lorsque le dispositif de nettoyage est en service, à jouer le rôle d'une buse d'extraction de l'air refoulé par le ventilateur 5.

Dans l'exemple représenté sur les figures 1 et 2, ladite deuxième extrémité ouverte 11 définit une fente qui présente, à titre indicatif, une épaisseur comprise entre 0,5 cm et 1 cm environ.

En référence à la figure 1, le boîtier 1 du dispositif de nettoyage est fixé, par des moyens d'assemblage appropriés, contre la surface interne 12 de la partie arrière 13 de la carrosserie du véhicule, dans une zone Z située directement au-dessus du feu arrière 2. La partie arrière 13 est recouverte d'une garniture 14, munie d'une doublure 15, et recouvrant également le boîtier 1.

Afin que le ventilateur 5 puisse prélever l'air qui circule dans l'habitacle 16, la garniture 14 est percée d'au moins un orifice 17. Pour les mêmes raisons, la doublure 15 est également percée de plusieurs orifices 18.

Le dispositif de nettoyage est monté de telle façon que le ventilateur 5 soit orienté en direction de l'habitacle 16 du véhicule et que le conduit d'écoulement d'air 8 repose en appui sur la paroi supérieure 19 du feu arrière 2, l'extrémité ouverte de la buse 11 débouchant sur le bord externe supérieur 20 du feu arrière 2 et s'étendant sur toute la longueur de ce dernier.

Il est fait en sorte qu'à l'état monté, la buse 11 présence une inclinaison telle que lorsque le dispositif de nettoyage est en service, l'air expulsé par la buse 11 est dirigé sur la surface externe 21 du feu arrière 2, selon une direction sensiblement tangente à cette surface ou selon une direction faisant un angle de piqué d'environ 5° par rapport à cette surface.

En outre, le dispositif de nettoyage est conçu de telle sorte que l'air expulsé parvient sur la surface externe 21 du feu arrière 2 avec une vitesse minimum de 12 m/s.

Dans l'exemple représenté, la partie arrière 13 de la carrosserie est le hayon du véhicule, mais il va de soi que dans d'autres modes de réalisation, cette partie arrière pourra être le panneau de coffre du véhicule.

Par conséquent, la conformation du boîtier 1 du dispositif de nettoyage variera en fonction du type de carrosserie dans laquelle il s'intègre. En particulier, pour chaque type de véhicule, la conformation du boîtier 1 sera déterminée pour que ce dernier puisse loger, de la manière la plus compacte possible, entre, d'une part, la paroi supérieure 19 du feu arrière 2 et, d'autre part, la surface interne 12 de la partie arrière 13 de la carrosserie du véhicule qui est comprise dans la zone Z.

Compte tenu du fait que le ventilateur 5 du dispostif de nettoyage est relié électriquement à la batterie du véhicule, le ventilateur 5 est mis en fonctionnement dès que le démarreur du véhicule est actionné.

Une telle disposition est particulièrement avantageuse dans le sens où même lorsque le véhicule est immobilisé, par exemple dans un embouteillage, l'air pollué par les particules d'échappement des véhicules voisins, qui remonte dans l'habitacle 16, est immédiatement prélevé par le ventilateur 5, puis refoulé par celui-ci dans le conduit d'écoulement d'air 8, et enfin expulsé par la buse 11. L'air expulsé est alows dirigé sur la surface externe 21 du feu arrière 2 avec la vitesse indiquée plus haut, ce qui a pour effet d'éliminer les particules, telles que notamment les particules de boue, de poussière, d'échappement et autres susceptibles de s'être accumulées sur la surface externe 21 du feu arrière 2. Notons que le dispositif de nettoyage selon l'invention convient également particulièrement bien pour empêcher le colmatage du feu arrière par de la neige, en raison du fait que l'air expulsé par la buse 11, qui provient de l'habitacle 16, est chaud, et fait donc fondre immédiatement la neige susceptible de s'accumuler sur le feu 2.

Par ailleurs, de par la conformation allongée de la buse 11, l'air est expulsé de façon sensiblement uniforme de manière à circuler sur toute la surface externe 21 du feu 2, un gain d'uniformité pouvant en outre être obtenu en disposant, par exemple, un système d'aubes dans le conduit d'écoulement d'air 8.

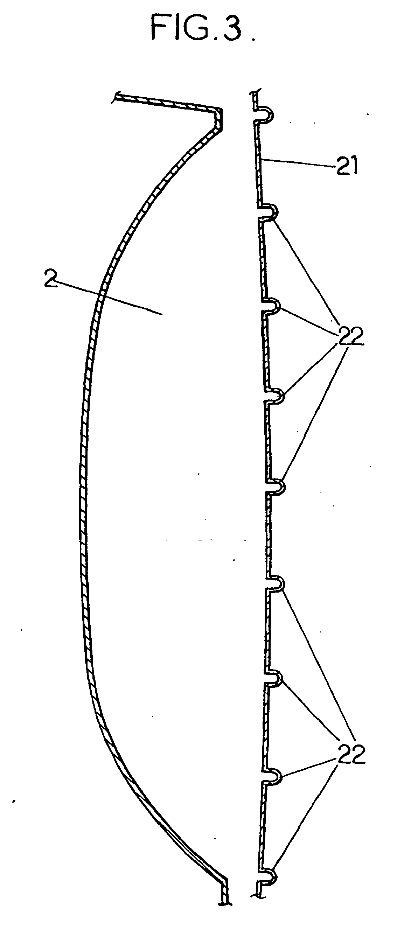

En référence à la figure 3, la surface externe 21 du feu arrière 2 est pourvue de plusieurs nervures 22, par exemple de forme arrondie, qui sont régulièrement espacées et qui s'étendent sur celle-ci selon une direction sensiblement verticale. Ces nervures 22, qui ont classiquement pour fonction de permettre une meilleure diffusion de la lumière émise par le feu 2, ont également pour fonction d'imposer une trajectoire déterminée à l'air expulsé qui circule sur la surface externe 21 du feu arrière 2. L'air expulse, ainsi parfaitement canalisé, pourra donc s'opposer à la circulation, même fermement turbulente, des particules de boue, de poussière, d'échappement et autres. Il convient également de noter que la présence des nervures 22 permet d'obtenir avantageusement une protection permanente des zones de la surface externe du feu arrière 2 qui sont comprises entre chacune desdites nervures, que le dispositif de nettoyage fonctionne ou non.

Le dispositif de nettoyage selon l'invention, est particulièrement destiné au nettoyage d'un feu arrière de véhicule, mais il apparaît de manière évidente pour l'homme de l'art qu'il peut convenir au nettoyage d'autres parties des véhicules, comme par exemple la poignée d'un hayon ou d'un coffre.

## Revendications

1. Dispositif de nettoyage de feu arrière (2) de véhicule automobile, comprenant un organe de circulation de courant d'air constitué d'un ventilateur électrique (5) qui est agencé à l'intérieur du véhicule et auquel est connecté un conduit d'écoulement d'air (8), une extrémité (11) de ce conduit débouchant dans la zone du feu arrière (2) de telle façon que l'air contenu à l'intérieur du véhicule est propulsé, par ledit ventilateur (5), dans le conduit d'écoulement d'air (8), puis expulsé par l'extrémité (11) dudit conduit en direction du feu arrière,
**caractérisé en ce qu'**il comprend un boîtier (1) disposé à proximité du feu arrière (2), ledit boîtier comportant une première partie (4) qui est conformée de manière à contenir ledit ventilateur (5), et une deuxième partie (8) qui est conformée de manière à constituer ledit conduit d'écoulement d'air.

2. Dispositif selon la revendication 1, **caractérisé en ce que** le feu arrière (2) comporte une surface externe (21) qui comporte un bord supérieur (20) au-dessus duquel débouche ladite extrémité (11) du conduit d'écoulement d'air (8), cette dernière étant orientée de telle sorte que l'air expulsé est dirigé selon une direction sensiblement tangente à la surface externe (21) du feu arrière (2).

3. Dispositif selon la revendication 2, **caractérisé en ce que** ladite extrémité (11) du conduit d'écoulement d'air (8) s'étend le long du bord supérieur (20) de la surface externe (21) du feu arrière.

4. Dispositif selon la revendication 2 ou la revendication 3, **caractérisé en ce que** ladite extrémité (11) du conduit d'écoulement d'air (8) définit une fente qui présente une épaisseur comprise entre 0,5 cm et 1 cm environ.

5. Dispositif selon l'une quelconque des revendications 1 à 4, **caractérisé en ce que** l'air expulsé a une vitesse minimum de 12 m/s.

6. Feu arrière de véhicule automobile destiné à être nettoyé par le dispositif selon l'une quelconque des revendications 1 à 5, **caractérisé en ce que** la surface externe (21) du feu arrière (2) comporte des moyens de guidage (22) pour imposer une trajectoire déterminée à l'air expulsé.

7. Feu arrière selon la revendication 6, **caractérisé en ce que** les moyens de guidage d'air sont des nervures qui s'étendent sur la surface externe (21) du feu arrière (2) selon une direction sensiblement verticale.

## Patentansprüche

1. Vorrichtung zur Reinigung einer Kraftfahrzeugheckleuchte (2), die ein Luftstromzirkulierungsglied umfasst, das aus einem elektrischen Gebläse (5) besteht, das im Innern des Fahrzeugs angeordnet ist und mit dem ein Luftströmungskanal (8) verbunden ist, wobei ein Ende (11) dieses Kanals so im Bereich der Heckleuchte (2) mündet, dass die im Fahrzeuginnern enthaltene Luft durch das Gebläse (5) in den Luftströmungskanal (8) getrieben und dann durch das Ende (11) des Kanals in die Richtung der Heckleuchte ausgestoßen wird, **dadurch gekennzeichnet, dass** sie ein Gehäuse (1) umfasst, das in der Nähe der Heckleuchte (2) angeordnet ist sowie einen ersten Teil (4), der zur Aufnahme des Gebläses (5) ausgelegt ist, und einen zweiten Teil (8), der zur Bildung des Luftströmungskanals ausgelegt ist, umfasst.

2. Vorrichtung nach Anspruch 1, **dadurch gekennzeichnet, dass** die Heckleuchte (2) eine Außenfläche (21) umfasst, die einen oberen Rand (20) aufweist, über dem das Ende (11) des Luftströmungskanals (8) mündet, wobei dieses Letztere so ausgerichtet ist, dass die ausgestoßene Luft in eine im Wesentlichen tangential zur Außenfläche (21) der Heckleuchte (2) verlaufende Richtung gerichtet ist.

3. Vorrichtung nach Anspruch 2, **dadurch gekennzeichnet, dass** sich das Ende (11) des Luftströmungskanals (8) entlang dem oberen Rand (20) der Außenfläche (21) der Heckleuchte erstreckt.

4. Vorrichtung nach Anspruch 2 oder 3, **dadurch gekennzeichnet, dass** das Ende (11) des Luftströmungskanals (8) einen Schlitz definiert, der etwa zwischen 0,5 cm und 1 cm breit ist.

5. Vorrichtung nach einem der Ansprüche 1 bis 4, **dadurch gekennzeichnet, dass** die ausgestoßene Luft eine Geschwindigkeit von mindestens 12 m/s ausgestoßen hat.

6. Kraftfahrzeugheckleuchte, die mit der Vorrichtung nach einem der Ansprüche 1 bis 5 gereinigt werden soll, **dadurch gekennzeichnet, dass** die Außenfläche (21) der Heckleuchte (2) Führungsmittel (22) umfasst, um der ausgestoßenen Luft eine bestimmte Bahn zu verleihen.

7. Heckleuchte nach Anspruch 6, **dadurch gekennzeichnet, dass** es sich bei den Luftführungsmitteln um Rillen handelt, die sich in einer im Wesentlichen vertikalen Richtung über die Außenfläche (21) der Heckleuchte (2) erstrecken.

## Claims

1. Cleaning device for the taillight (2) of an automobile vehicle, comprising an air current (5) circulation part formed from an electric ventilator which is fitted inside the vehicle and to which an air flow pipe (8) is connected, one end (11) of this pipe opening out into the taillight (2) area in such a manner that the air contained inside the vehicle is propelled by the said ventilator (5) into the air flow pipe (8), then expelled by the end (11) of the said pipe in the direction of the taillight, **characterised in that** it comprises a box (1) located in the vicinity of the taillight (2), the said box comprising a first part (4) which is adapted so as to contain the said ventilator (5) and a second part (8) which is adapted to form the said air flow pipe.

2. Device according to claim 1 **characterised by** the fact that the taillight (2) comprises an external surface (21) which comprises an upper edge (20) above which the said end (11) of the air flow pipe (8) open outs, the latter being orientated in such a way that the expelled air is directed according to a direction which is approximately tangential to the external surface (21) of the taillight (2).

3. Device according to claim 2 **characterised in that** the said end (11) of the air flow pipe (8) extends along the upper edge (20) of the external surface (21) of the taillight.

4. Device according to claim 2 or claim 3 **characterised in that** the said end (11) of the airflow pipe (8) defines a slot which has a thickness between 0.5cm and 1cm approximately.

5. Device according to any of claims 1 to 4 **characterised in that** the expelled air has a minimum speed of 12 m/s.

6. Automobile vehicle taillight designed to be cleaned by the device according to any of claims 1 to 5, **characterised in that** the external surface (21) of the taillight (2) comprises guiding means (22) to impose a determined trajectory on the expelled air.

7. Taillight light according to claim 6 **characterised in that** the air guiding means are ribs which extend over the external surface (21) of the taillight (2) according to an approximately vertically direction.
